# EUROPÄISCHE PATENTSCHRIFT

(11) **EP 4 027 320 B1**
(45) Veröffentlichungstag und Bekanntmachung des Hinweises auf die Patenterteilung: **06.05.2026**
(21) Anmeldenummer: 22159707.3
(22) Anmeldetag: 14.01.2020
(51) Int. Cl.: G08G 5/22, G08G 5/26, G08G 5/55, G08G 5/72, F03D 80/10, H04B 7/185, G01S 5/02

(54) **VERFAHREN UND ANLAGE ZUR STEUERUNG VON FLUGHINDERNISBEFEUERUNGEN IN WINDPARKS**
METHOD AND INSTALLATION FOR CONTROLLING THE AIRVEHICLE WARNING LIGHTING IN WIND FARMS
PROCÉDÉ ET INSTALLATION DE COMMANDE DE L'ÉCLAIRAGE D'AVERTISSEMENT DE VÉHICULES AÉRIENS DANS DES PARCS ÉOLIENS

(30) Priorität: 15.01.2019 DE 102019100910; 25.01.2019 DE 102019101886
(43) Veröffentlichungstag der Anmeldung: 13.07.2022
(62) Teilanmeldung aus: 20151578.0
(73) Patentinhaber: AlexCo Holding GmbH, 30659 Hannover (DE)
(72) Erfinder: Gerdes, Alexander, 30659 Hannover (DE); Sevim, Alper, 20149 Hamburg (DE)
(74) Vertreter: Gramm, Lins & Partner Patent- und Rechtsanwälte PartGmbB

(56) Entgegenhaltungen:
- WO-A1-2006/092137
- WO-A1-2015/065253
- WO-A1-2017/120110
- WO-A1-2018/132438
- WO-A1-99/22465
- WO-A2-2006/123227
- DE-A1- 102015 118 028
- US-A- 5 557 656
- US-A- 6 094 169
- US-A1- 2005 200 501
- US-A1- 2008 036 659
- US-A1- 2018 172 797
- US-B1- 6 735 438

## Beschreibung

Allgemein betrifft die Erfindung die Erfassung von Luftfahrzeugen in Niedrigstflughöhen, z.B. tieffliegende Hubschrauber oder Sportflugzeuge. Die Erfassung von Daten solcher Luftfahrzeuge und deren Bereitstellung kann z.B. für die Ansteuerung von Signalgebern an Luftfahrthindernissen genutzt werden, z.B. für das rechtzeitige Einschalten nicht dauerbetriebener Befeuerungsanlagen an Windenergieanlagen. Die entsprechenden Daten können selbstverständlich auch für andere Zwecke genutzt werden, z.B. zur Darstellung von Flugbewegungen in einem überwachten Gebiet.

Aus der DE 20 2005 019 193 U1 oder der EP 2 432 693 B1 sind Vorschläge bekannt, eine Steuerung von Hindernisbefeuerungen anhand von Transpondersignalen von Luftfahrzeugen durchzuführen. Da solche Transpondersignale im Regelfall bereits eine Höhen- und Ortsinformation des Luftfahrzeugs enthalten, kann durch Vergleich mit der geografischen Position eines Luftfahrthindernisses auf eine Kollisionsgefahr und dementsprechend auf einen Bedarf, die Hindernisbefeuerung des Luftfahrthindernisses einzuschalten, geschlossen werden. Aus der WO 2017/120 110 A1 ist die Nutzung einer nationalen zellulären Infrastruktur für die Steuerung und Kontrolle von UAVs bekannt. Aus der WO 09/22465 A1 ist eine nicht-terrestrische zelluläre mobile Telekommunikationsstation bekannt. Aus der WO 2006/123 227 A2 ist eine Anordnung, ein System und ein Verfahren zum Kommunizieren mit Luftfahrzeugen durch zelluläre Basisstationstürme bekannt. Aus der US 6,735,438 B1 ist eine Antenne für die Luft-zu-Boden Kommunikation bekannt. Aus der US 6,094,169 ist eine Multilaterations-Autokalibrierung und eine Positionsfehlerkorrektur bekannt. Aus der DE 10 2015 118 028 A1 ist die Überwachung tieffliegender Luftfahrzeuge bekannt.

Der Erfindung liegt die Aufgabe zugrunde, alternative und/oder verbesserte Möglichkeiten zur Erfassung von Flugbewegungen von Luftfahrzeugen aufzuzeigen.

Ein Aspekt der vorliegenden Erfindung ist ein Antennenmast eines zellulären Mobiltelefonnetzes, aufweisend eine oder mehrere Mobilfunkantennen zur Bildung einer Luftschnittstelle des Mobiltelefonnetzes zu in der Umgebung befindlichen Mobiltelefonen, wobei an dem Antennenmast wenigstens Empfangseinrichtung zum Empfang von Flugzeug-Transpondersignalen angeordnet ist. Erfindungsgemäß wurde erkannt, dass zelluläre Mobilfunknetze eine vorteilhafte Infrastruktur für die Überwachung des Luftverkehrs bieten, da sie bereits ein relativ dichtes landesweites Netz von Antennenmasten aufweisen, das erfindungsgemäß lediglich um ein Empfangseinrichtungen zum Empfang von Flugzeug-Transpondersignalen zu erweitern ist, um eine zuverlässige Luftverkehrs-Überwachung insbesondere in Niedrigstflughöhen zu ermöglichen. Da im Bereich eines solchen Antennenmasts bereits die notwendigen Ressourcen wie elektrische Stromversorgung und Anbindung an ein Datennetzwerk vorhanden sind, ist die entsprechende Erweiterung einfach und kostengünstig zu realisieren. Der Antennenmast kann beispielsweise bereits eine Basisstation eines Mobiltelefonnetzes aufweisen.

Gemäß einer vorteilhaften Weiterbildung der Erfindung weist die Empfangseinrichtung zum Empfangen von Flugzeug-Transpondersignalen eine Empfangsantenne mit zumindest überwiegend horizontal ausgerichteter Empfangscharakteristik auf. Dies ermöglicht eine besonders effiziente und weitreichende Erfassung tieffliegender Luftfahrzeuge. Die Erfassung hochfliegender Luftfahrzeuge ist für die Realisierung dieser Weiterbildung der Erfindung dagegen unwesentlich.

Ein weiterer Aspekt der vorliegenden Erfindung ist ein zelluläres Mobiltelefonnetz, z.B. ein landesweites zelluläres Mobiltelefonnetz, das ausschließlich oder überwiegend Antennenmasten der zuvor erläuterten Art aufweist. Auch hierdurch können die zuvor erläuterten Vorteile realisiert werden. Als landesweites zelluläres Mobiltelefonnetz wird in diesem Zusammenhang auch ein Mobiltelefonnetz verstanden, dass dem Grunde nach für einen landesweiten Betrieb ausgelegt ist, aber auch eine Netzabdeckung von weniger als 100% aufweisen kann.

Gemäß einer vorteilhaften Weiterbildung der Erfindung ist eine Anlage zur Steuerung von Flughindernisbefeuerungen zumindest datenübertragungstechnisch mit der Empfangseinrichtung wenigstens eines Antennenmastes der zuvor erläuterten Art, mehreren Empfangseinrichtungen von mehreren Antennenmasten der zuvor erläuterten Art und/oder einem zellulären Mobiltelefonnetz der zuvor erläuterten Art gekoppelt, wobei die Anlage zur Steuerung der Flughindernisbefeuerung dazu eingerichtet ist, aufgrund von der Empfangseinrichtung oder von den Empfangseinrichtungen empfangenen Daten oder Signalen die Flughindernisbefeuerungen zu steuern. Das Steuern der Flughindernisbefeuerungen schließt insbesondere das Einschalten und/oder das Ausschalten von Flughindernisbefeuerungen ein. Die Anlage zur Steuerung von Flughindernisbefeuerungen kann eine lokale Anlage sein, die einer Windenergieanlage oder einem Park von Windenergieanlagen zugeordnet ist. Die Anlage zur Steuerung der Flughindernisbefeuerung kann auch eine von einzelnen Windenergieanlagen oder Windenergieanlagen-Parks unabhängige Anlage sein, z.B. eine Anlage der nachfolgend erläuterten Art zur Bereitstellung von Flugdaten von Luftfahrzeugen. Die Erzeugung von Einschaltsignalen und/oder Ausschaltsignalen für die Flughindernisbefeuerungen kann beispielsweise nach einem Verfahren der nachfolgend erläuterten Art erfolgen.

Die eingangs genannte Aufgabe wird außerdem gelöst durch ein Verfahren zur Steuerung von Flughindernisbefeuerungen mit folgenden Schritten:
a) an mehreren Empfangseinrichtungen, die an unterschiedlichen Orten installiert sind, werden über Funk ausgesendete Kennungsdatensätze von Luftfahrzeugen empfangen, wobei ein Kennungsdatensatz zumindest eine das jeweilige den Kennungsdatensatz aussendende Luftfahrzeug eindeutig kennzeichnende Information aufweist,
b) in der jeweiligen Empfangseinrichtung (2) wird einem empfangenen Kennungsdatensatz wenigstens ein in der Empfangseinrichtung (2) gemessener physikalischer Kennwert, insbesondere ein Empfangszeitpunkt und/oder eine Empfangsleistung, des empfangenen Kennungsdatensatzes zugeordnet,
c) in einer Auswerteeinrichtung werden die von einem Luftfahrzeug stammenden Kennwerte derart zueinander in Beziehung gesetzt, dass Varianzen zwischen den empfangenen Funksignalen in Form von Unterschieden zwischen den Kennwerten bestimmt werden,
d) aus den Varianzen wird die aktuelle dreidimensionale geografische Position des Luftfahrzeugs bestimmt,
wobei die Empfangseinrichtungen als Datenpakete, die der Auswerteeinrichtung bereitgestellt werden, wenigstens folgende Informationen bereitstellen: Empfangszeitpunkt, Signalstärke, das Luftfahrzeug eindeutig kennzeichnende Informationen, und die Auswerteeinrichtung unter Berücksichtigung der ihr bekannten geografischen Positionen von Windparks und der dreidimensionalen geografischen Position des Luftfahrzeugs Einschalt- und/oder Ausschaltsignale zum Einschalten oder Ausschalten der Flughindernisbefeuerungen erzeugt und an die Luftfahrthindernisse überträgt.

Die dreidimensionale geografische Position des Luftfahrzeugs kann insbesondere die geografische Länge, die geografische Breite und die Flughöhe des Luftfahrzeugs umfassen. Auf diese Weise kann durch kooperative Auswertung von an verschiedenen Empfangseinrichtungen empfangenen Kennungsdatensätzen die aktuelle dreidimensionale geografische Position des Luftfahrzeugs zuverlässig bestimmt werden. Das erfindungsgemäße Verfahren ist damit insbesondere unabhängig vom Vorhandensein von die geografische Position des Luftfahrzeugs kennzeichnenden Daten in den Transpondersignalen der Luftfahrzeuge. Dies hat den Vorteil, dass das erfindungsgemäße Verfahren mit jeder Art von über Funk ausgesendeten Kennungsdatensätzen von Luftfahrzeugen kompatibel ist, unabhängig davon, ob diese Kennungsdatensätze eigene Informationen über die geografische Position des Luftfahrzeugs enthalten oder nicht. Das erfindungsgemäße Verfahren ist damit wesentlich weniger störungsanfällig als bekannte Lösungen.

Die Empfangseinrichtungen können insbesondere Empfangseinrichtungen zum Empfang von Flugzeug-Transpondersignalen sein. Die Empfangseinrichtungen können räumlich gleichmäßig oder ungleichmäßig über ein zu überwachendes Gebiet verteilt sein, z.B. derart, dass die Empfangseinrichtungen jeweils an Antennenmasten eines zellulären Mobiltelefonnetzes angeordnet sind, wie zuvor erläutert.

Ein in der Empfangseinrichtung gemessener physikalischer Kennwert kann z.B. ein mittels Zeitmessung bestimmter Empfangszeitpunkt und/oder eine mittels Leistungsmessung bestimmte Empfangsleistung sein. Die Empfangsleistung kann z.B. aus einem RSSI-Signal (RSSI - Received Signal Strength Information) gewonnen werden, das die Empfangseinrichtung bereitstellt. Es können dann z.B. in der Auswerteeinrichtung die von einem Luftfahrzeug stammenden Empfangszeitpunkte und/oder Empfangsleistungen derart zueinander in Beziehung gesetzt werden, dass Varianzen zwischen den empfangenen Funksignalen in Form von Zeitunterschieden der Empfangszeitpunkte und/oder Leistungsunterschiede der Empfangsleistungen bestimmt werden.

Die im Schritt b) in der jeweiligen Empfangseinrichtung einem empfangenen Kennungsdatensatz zugeordneten weiteren Informationen wie Empfangszeitpunkt, Empfangsleistung und/oder sonstiger gemessener physikalischer Kennwert können beispielsweise in Form eines Datenpakets der Auswerteeinrichtung zugeführt werden. Die Auswerteeinrichtung kann in Form einer zentralen Auswerteeinrichtung ausgebildet sein, die räumlich entfernt von sämtlichen Empfangseinrichtungen oder räumlich mit einer Empfangseinrichtung kombiniert sein kann. Die Auswerteeinrichtung kann auch aus mehreren separaten Computereinrichtungen gebildet sein, die an einem Ort oder an verschiedenen Orten aufgestellt sind und miteinander vernetzt sind. Beispielsweise können Teile der Auswerteeinrichtung kombiniert mit Empfangseinrichtungen angeordnet sein und andere Teile entfernt von solchen Empfangseinrichtungen angeordnet sein.

Gemäß einer vorteilhaften Ausgestaltung der Erfindung ist vorgesehen, dass die dreidimensionale geografische Position des Luftfahrzeugs durch Triangulation und/oder Trilateration aus den Varianzen bestimmt wird. Dies erlaubt eine zuverlässige rechnerische Bestimmung der dreidimensionalen geografischen Position des Luftfahrzeugs. Hierfür werden im Regelfall Datensätze aus wenigstens drei voneinander entfernten Empfangseinrichtungen benötigt. Stehen Datensätze von mehr als drei Empfangseinrichtungen zur Verfügung, können diese zur Erhöhung der Genauigkeit (Redundanz) der Bestimmung der dreidimensionalen geografischen Position des Luftfahrzeugs genutzt werden.

Gemäß einer vorteilhaften Ausgestaltung der Erfindung ist vorgesehen, dass aus einer Vielzahl von für ein Luftfahrzeug nacheinander bestimmten dreidimensionalen geografischen Positionen die Flugrichtung und/oder die Fluggeschwindigkeit des Luftfahrzeugs bestimmt wird. Auf diese Weise kann anhand der an den mehreren Empfangseinrichtungen empfangenen Kennungsdatensätzen eine weitergehende Information bestimmt werden, die eine Prognose der dreidimensionalen geografischen Position in die Zukunft ermöglicht. Dies hat wiederum den Vorteil, dass das Verfahren noch störunanfälliger wird, weil kurze Datenlücken im Empfang rechnerisch anhand der Flugrichtung und der Fluggeschwindigkeit kompensiert werden können.

Erfindungsgemäß ist vorgesehen, dass die Auswerteeinrichtung die dreidimensionale geografische Position des Luftfahrzeugs Systemen zur Steuerung von Flughindernisbefeuerungen bereitstellt und/oder erfindungsgemäß Einschalt- und/oder Ausschaltsignale zum Einschalten oder Ausschalten von Flughindernisbefeuerungen aussendet. Somit kann die Auswerteeinrichtung entweder direkt an der Steuerung der Flughindernisbefeuerungen beteiligt sein, indem sie Einschalt- und/oder Ausschaltsignale bereitstellt. Stellt die Auswerteeinrichtung lediglich die dreidimensionale geografische Position anderen Systemen zur Steuerung von Flughindernisbefeuerungen bereit, so können diese durch Vergleich mit einer bekannten geografischen Position eines Luftfahrthindernisses selbsttätig die Steuerung der Flughindernisbefeuerung (Einschalten/Ausschalten) übernehmen.

Gemäß einer vorteilhaften Ausgestaltung der Erfindung ist vorgesehen, dass zumindest zu vorgegebenen Zeitpunkten ein Abgleich zwischen der von der Auswerteeinrichtung ermittelten dreidimensionalen geografischen Position des Luftfahrzeugs und von dem Luftfahrzeug über Funk selbst ausgesendeten Positionsdaten, die die dreidimensionale geografische Position des Luftfahrzeugs kennzeichnen, durchgeführt wird. Auf diese Weise kann eine Stützung der mit dem erfindungsgemäßen Verfahren berechneten Daten, d.h. aktuelle dreidimensionale geografische Position und ggf. daraus bestimmten Daten wie Flugrichtung und/oder Fluggeschwindigkeit, anhand der beispielsweise vom Transponder bereitgestellten Signale durchgeführt werden. Hierdurch kann die Sicherheit des erfindungsgemäßen Verfahrens sowie die Datenintegrität weiter verbessert werden.

Gemäß einer vorteilhaften Ausgestaltung der Erfindung ist vorgesehen, dass bei Verlust des empfangenen Funksignals eines Luftfahrzeugs eine erste Mindesteinschaltzeit für die Flughindernisbefeuerung bestimmt wird, die anhand der zuvor bestimmten Flugrichtung und Fluggeschwindigkeit des Luftfahrzeugs berechnet wird. Dementsprechend kann bei einem solchen Signalverlust die Aufenthaltsdauer des Luftfahrzeugs im Bereich der Luftfahrthindernisse zumindest abgeschätzt werden und durch die erste Mindesteinschaltzeit sichergestellt werden, dass die Flughindernisbefeuerung nicht abgeschaltet wird, bevor das Luftfahrzeug den Bereich des Luftfahrthindernisses verlassen hat. Es wird somit erst dann ein Ausschalten der Flughindernisbefeuerung bewirkt, wenn die erste Mindesteinschaltzeit abgelaufen ist.

Gemäß einer vorteilhaften Ausgestaltung der Erfindung ist vorgesehen, dass zusätzlich eine von den Flugdaten des Luftfahrzeugs unabhängige zweite Mindesteinschaltzeit festgelegt für die Flughindernisbefeuerung ist, wobei die Flughindernisbefeuerung erst deaktiviert wird, wenn die erste und die zweite Mindesteinschaltzeit abgelaufen sind. Auf diese Weise wird eine von den berechneten Daten unabhängige Einschaltdauer der Flughindernisbefeuerung festgelegt, wodurch die Sicherheit gegenüber einem zu frühen Abschalten der Flughindernisbefeuerung weiter gesteigert wird.

Die eingangs genannte Aufgabe wird außerdem gelöst durch ein Computerprogramm mit Programmcodemitteln, eingerichtet zur Durchführung eines Verfahrens der zuvor erläuterten Art, wenn das Verfahren auf einem Rechner ausgeführt wird. Auch hierdurch können die zuvor erläuterten Vorteile realisiert werden. Der Rechner kann z.B. der Rechner der Auswerteeinrichtung sein oder einer oder mehrere Rechner von Computereinrichtungen, die die Auswerteeinrichtung bilden.

Die eingangs genannte Aufgabe wird außerdem gelöst durch eine Anlage zur Steuerung von Flughindernisbefeuerungen gemäß Anspruch 8.

Auch hierdurch können die zuvor erläuterten Vorteile realisiert werden. Hierbei können mehrere oder alle Empfangseinrichtungen der Anlage jeweils an einem Antennenmast eines zellulären Mobiltelefonnetzes angeordnet sein. Mehrere oder alle Empfangseinrichtungen der Anlage können jeweils als Empfangseinrichtung zum Empfang von Flugzeug-Transpondersignalen ausgebildet sein.

Die Erfindung wird nachfolgend anhand von Ausführungsbeispielen unter Verwendung von Zeichnungen näher erläutert.

Es zeigen
- Figur 1 -: eine geografische Übersicht über eine erfindungsgemäße Anlage und
- Figur 2 -: eine schematische Darstellung einer erfindungsgemäßen Anlage.

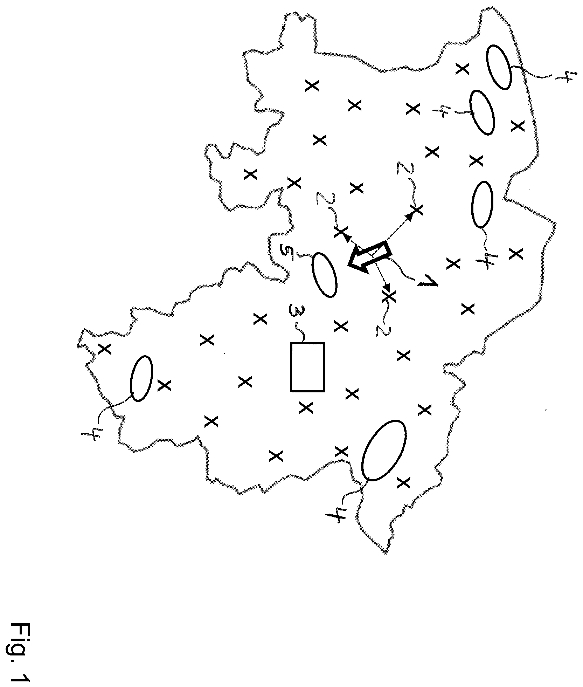

Die Figur 1 zeigt ein geografisches Gebiet, in dem eine Vielzahl von Empfangseinrichtungen angeordnet sind, die jeweils mit einem "X" gekennzeichnet sind. In dem Gebiet befinden sich außerdem verschiedene Luftfahrthindernisse, die beispielhaft in Form von Windparks 4, 5 dargestellt sind. Das Gebiet wird von einem Luftfahrzeug 1 überflogen. Das Luftfahrzeug 1 ist in Form eines Pfeils dargestellt, der zudem die Flugrichtung angibt. Wie man erkennt, fliegt das Luftfahrzeug 1 auf einen Windpark 5 zu.

Das Luftfahrzeug 1 weist einen Funksignalgeber auf, z.B. einen Flugzeug-Transponder, durch den über Funk Kennungsdatensätze des Luftfahrzeugs 1 ausgesandt werden. Beispielhaft ist in der Figur 1 dargestellt, dass die Kennungsdatensätze des Luftfahrzeugs 1 an drei in der Nähe befindlichen Empfangseinrichtungen 2 empfangen und erfindungsgemäß weiterverarbeitet werden, d.h. einem empfangenen Kennungsdatensatz werden in der jeweiligen Empfangseinrichtung 2 ein Empfangszeitpunkt und/oder eine Empfangsleistung zugeordnet. Die in den Empfangseinrichtungen 2 auf diese Weise bereitgestellten Datenpakete werden einer Auswerteeinrichtung 3 zugeführt, in der die Varianzen zwischen den empfangenen Funksignalen in Form von Zeitunterschieden der Empfangszeitpunkte und/oder Leistungsunterschieden der Empfangsleistungen bestimmt werden. Aus den Varianzen wird die aktuelle dreidimensionale geografische Position des Luftfahrzeugs 1 bestimmt. In der Auswerteeinrichtung 3 kann ferner die Flugrichtung und die Fluggeschwindigkeit des Luftfahrzeugs 1 bestimmt werden.

Erfindungsgemäß stellen die Empfangseinrichtungen 2, X als Datenpakete die folgende Informationen:
- Empfangszeitpunkt T
- Signalstärke P
- Das Luftfahrzeug 1 eindeutig kennzeichnende Informationen, z.B. eine Transponderidentifikationsnummer und/oder eine Transpondersignalnummer Optional können die Empfangseinrichtungen 2, X im Datenpaket zusätzlich eine, mehrere oder alle der folgenden Informationen bereitstellen, die jeweils aus dem Kennungsdatensatz des Luftfahrzeugs 1 ausgelesen werden:
   - Geschwindigkeit des Luftfahrzeugs 1
   - Flughöhe des Luftfahrzeugs 1
   - Flugrichtung des Luftfahrzeugs 1

Die Auswerteeinrichtung 3 kann dann unter Berücksichtigung der ihr bekannten geografischen Positionen der Windparks 4, 5 und der geografischen Position des Luftfahrzeugs Einschalt- und/oder Ausschaltsignale zum Einschalten oder Ausschalten der Flughindernisbefeuerungen erzeugen und an die Luftfahrthindernisse übertragen. Beispielsweise würde im in der Figur 1 dargestellten Beispiel die Auswerteeinrichtung 3 Einschaltsignale für die Flughindernisbefeuerung des Windparks 5 erzeugen, sodass dort die Flughindernisbefeuerung eingeschaltet wird. Die Auswerteeinrichtung 3 kann außerdem Ausschaltsignale für die Flughindernisbefeuerung des Windparks 5 erzeugen, sodass dort die Flughindernisbefeuerung wieder ausgeschaltet wird.

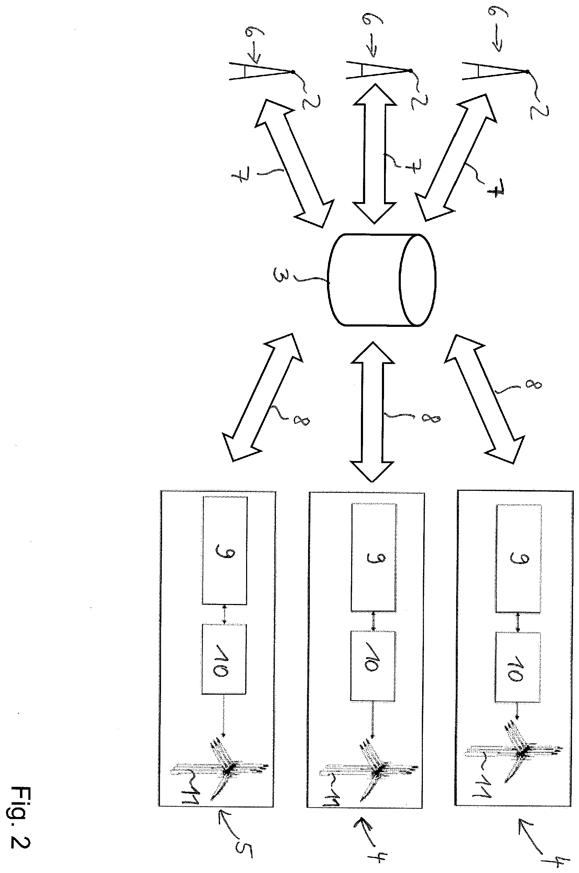

Die Figur 2 verdeutlicht insbesondere das Zusammenwirken der einzelnen Elemente der Anlage und die Datenflüsse. Die Empfangseinrichtungen 2, X sind jeweils an Antennenmasten 6 angeordnet, z.B. an einem Antennenmast eines zellulären Mobiltelefonnetzes. Über Datenverbindungen 7 werden die von den Empfangseinrichtungen 2, X bereitgestellten Datenpakete an die Auswerteeinrichtung 3 übertragen. Die Auswerteeinrichtung 3 führt die erläuterten Auswertungen durch und überträgt die Einschaltsignale und/oder Ausschaltsignale für die Flughindernisbefeuerungen über Datenverbindungen 8 an die Luftfahrthindernisse bzw. die Windparks 4, 5. Die Datenübertragung über die Datenverbindungen 7, 8 kann drahtgebunden oder drahtlos erfolgen.

Die über die Datenverbindungen 8 übertragenen Einschaltsignale und/oder Ausschaltsignale werden in den jeweiligen Windparks 4, 5 über Schnittstellengeräte 9 jeweiligen Ansteuergeräten 10 bereitgestellt. Die Ansteuergeräte 10 dienen zur Umsetzung der Einschaltsignale und der Ausschaltsignale in entsprechende Betätigungen der Hindernisbefeuerungen. Beispielsweise kann das Ansteuergerät 10 die elektrische Energieversorgung eines Signalgebergeräts der Flughindernisbefeuerung einschalten und ausschalten.

## Patentansprüche

1. Verfahren zur Steuerung von Flughindernisbefeuerungen mit folgenden Schritten:
a) an mehreren Empfangseinrichtungen (2), die an unterschiedlichen Orten installiert sind und Empfangsantennen mit horizontal ausgerichteter Empfangscharakteristik aufweisen, werden über Funk ausgesendete Kennungsdatensätze von Luftfahrzeugen (1) empfangen, wobei ein Kennungsdatensatz zumindest eine das jeweilige den Kennungsdatensatz aussendende Luftfahrzeug (1) eindeutig kennzeichnende Information aufweist,
b) in der jeweiligen Empfangseinrichtung (2) wird einem empfangenen Kennungsdatensatz wenigstens ein in der Empfangseinrichtung (2) gemessener physikalischer Kennwert, insbesondere ein Empfangszeitpunkt und/oder eine Empfangsleistung, des empfangenen Kennungsdatensatzes zugeordnet,
c) in einer Auswerteeinrichtung (3) werden die von einem Luftfahrzeug (1) stammenden Kennwerte derart zueinander in Beziehung gesetzt, dass Varianzen zwischen den empfangenen Funksignalen in Form von Unterschieden zwischen den Kennwerten bestimmt werden,
d) aus den Varianzen wird die aktuelle dreidimensionale geografische Position des Luftfahrzeugs (1) bestimmt
wobei die Empfangseinrichtungen (2) als Datenpakete, die der Auswerteeinrichtung (3) bereitgestellt werden, wenigstens folgende Informationen bereitstellen: Empfangszeitpunkt, Signalstärke, das Luftfahrzeug (1) eindeutig kennzeichnende Informationen, und die Auswerteeinrichtung (3) unter Berücksichtigung der ihr bekannten geografischen Positionen von Windparks (4, 5) und der dreidimensionalen geografischen Position des Luftfahrzeugs Einschalt- und/oder Ausschaltsignale zum Einschalten oder Ausschalten der Flughindernisbefeuerungen erzeugt und an die Luftfahrthindernisse überträgt.

2. Verfahren nach Anspruch 1, **dadurch gekennzeichnet, dass** die dreidimensionale geografische Position des Luftfahrzeugs (1) durch Triangulation und/oder Trilateration aus den Varianzen bestimmt wird.

3. Verfahren nach einem der Ansprüche 1 bis 2, **dadurch gekennzeichnet, dass** aus einer Vielzahl von für ein Luftfahrzeug (1) nacheinander bestimmten dreidimensionalen geografischen Positionen die Flugrichtung und/oder die Fluggeschwindigkeit des Luftfahrzeugs (1) bestimmt wird.

4. Verfahren nach einem der Ansprüche 1 bis 3, **dadurch gekennzeichnet, dass** die Auswerteeinrichtung (3) die dreidimensionale geografische Position des Luftfahrzeugs (1) Systemen (9, 10) zur Steuerung von Flughindernisbefeuerungen bereitstellt und/oder Einschalt- und/oder Ausschaltsignale zum Einschalten oder Ausschalten von Flughindernisbefeuerungen aussendet.

5. Verfahren nach einem der Ansprüche 1 bis 4, **dadurch gekennzeichnet, dass** bei Verlust des empfangenen Funksignals eines Luftfahrzeugs (1) eine erste Mindesteinschaltzeit für die Flughindernisbefeuerung bestimmt wird, die anhand der zuvor bestimmten Flugrichtung und Fluggeschwindigkeit des Luftfahrzeugs (1) berechnet wird.

6. Verfahren nach Anspruch 5, **dadurch gekennzeichnet, dass** zusätzlich eine von den Flugdaten des Luftfahrzeugs (1) unabhängige zweite Mindesteinschaltzeit festgelegt für die Flughindernisbefeuerung ist, wobei die Flughindernisbefeuerung erst deaktiviert wird, wenn die erste und die zweite Mindesteinschaltzeit abgelaufen sind.

7. Computerprogramm mit Programmcodemitteln, eingerichtet zur Durchführung eines Verfahrens nach einem der Ansprüche 1 bis 6, wenn das Verfahren auf einem Rechner ausgeführt wird.

8. Anlage zur Steuerung von Flughindernisbefeuerungen mit folgenden Merkmalen:
a) mehrere Empfangseinrichtungen (2), die an unterschiedlichen Orten installiert sind und Empfangsantennen mit horizontal ausgerichteter Empfangscharakteristik aufweisen und zum Empfang von über Funk von Luftfahrzeugen (1) ausgesendeten Kennungsdatensätzen eingerichtet sind, wobei ein Kennungsdatensatz zumindest eine das jeweilige den Kennungsdatensatz aussendende Luftfahrzeug (1) eindeutig kennzeichnende Information aufweist,
b) eine jeweilige Empfangseinrichtung (2) ist dazu eingerichtet, einem empfangenen Kennungsdatensatz wenigstens einen in der Empfangseinrichtung (2) gemessenen physikalischen Kennwert, insbesondere einen Empfangszeitpunkt und/oder eine Empfangsleistung des empfangenen Kennungsdatensatzes, zuzuordnen,
c) eine Auswerteeinrichtung (3), die dazu eingerichtet ist, die von einem Luftfahrzeug (1) stammenden Kennwerte derart zueinander in Beziehung zu setzen, dass Varianzen zwischen den empfangenen Funksignalen in Form von Unterschieden zwischen den Kennwerten bestimmt werden,
d) die Auswerteeinrichtung ist dazu eingerichtet, aus den Varianzen die aktuelle dreidimensionale geografische Position des Luftfahrzeugs (1) zu bestimmen
wobei die Empfangseinrichtungen (2) als Datenpakete, die der Auswerteeinrichtung (3) bereitgestellt werden, wenigstens folgende Informationen bereitstellen: Empfangszeitpunkt, Signalstärke, das Luftfahrzeug (1) eindeutig kennzeichnende Informationen, und die Auswerteeinrichtung (3) unter Berücksichtigung der ihr bekannten geografischen Positionen von Windparks (4, 5) und der dreidimensionalen geografischen Position des Luftfahrzeugs Einschalt- und/oder Ausschaltsignale zum Einschalten oder Ausschalten der Flughindernisbefeuerungen erzeugt und an die Luftfahrthindernisse überträgt.

9. Anlage nach Anspruch 8, **dadurch gekennzeichnet, dass** mehrere oder alle Empfangseinrichtungen (2) der Anlage jeweils an einem Antennenmast (6) eines zellulären Mobiltelefonnetzes angeordnet sind.

10. Anlage nach Anspruch 8 oder 9, **dadurch gekennzeichnet, dass** mehrere oder alle Empfangseinrichtungen (2) der Anlage jeweils als Empfangseinrichtung zum Empfang von Flugzeug-Transpondersignalen ausgebildet sind.

## Claims

1. Method for controlling air obstacle lighting, comprising the following steps:
a) at a plurality of receiving devices (2) installed at different locations and having receiving antennas with horizontally aligned receiving characteristics, identification data records (1) of aircrafts transmitted by radio are received, wherein an identification data record has at least one item of information that uniquely identifies the respective aircraft (1) transmitting the identification data record,
b) in the respective receiving device (2), at least one physical characteristic value measured in the receiving device (2), in particular a reception time and/or a reception power, of the received identification data record is assigned to a received identification data record,
c) in an evaluation device (3), the characteristic values originating from an aircraft (1) are correlated with each other in such a way that variances between the received radio signals are determined in the form of differences between the characteristic values,
d) the current three-dimensional geographical position of the aircraft (1) is determined from the variances
wherein the receiving devices (2) providing at least the following information as data packets that are made available to the evaluation device (3): reception time, signal strength, information that uniquely identifies the aircraft (1), and the evaluation device (3), taking into account the geographical positions of wind farms (4, 5) known to it and the three-dimensional geographical position of the aircraft, generates switch-on and/or switch-off signals for switching on or off the air obstacle lighting and transmits them to the air obstacles.

2. Method according to claim 1, **characterized in that** the three-dimensional geographical position of the aircraft (1) is determined by triangulation and/or trilateration from the variances.

3. Method according to one of claims 1 to 2, **characterized in that**, from a plurality of three-dimensional geographical positions determined successively for an aircraft (1), the flight direction and/or flight speed of the aircraft (1) is determined.

4. Method according to one of claims 1 to 3, **characterized in that** the evaluation device (3) provides the three-dimensional geographical position of the aircraft (1) to systems (9, 10) for controlling air obstacle lightings and/or transmits switch-on and/or switch-off signals for switching air obstacle lightings on or off.

5. Method according to one of claims 1 to 4, **characterized in that**, in the event of loss of the received radio signal from an aircraft (1), a first minimum switch-on time for the air obstacle lighting is determined, which is calculated on the basis of the previously determined flight direction and flight speed of the aircraft (1).

6. Method according to claim 5, **characterized in that** a second minimum switch-on time for the aircraft obstacle lighting is additionally specified, which is independent of the flight data of the aircraft (1), whereby the air obstacle lighting is only deactivated when the first and second minimum switch-on times have elapsed.

7. Computer program with program code means, designed to carry out a method according to one of claims 1 to 6 when the method is executed on a computer.

8. System for controlling air obstacle lighting with the following features:
a) a plurality of receiving devices (2) which are installed at different locations and have receiving antennas with horizontally aligned receiving characteristics and are designed to receive identification data records transmitted by radio from aircraft (1), wherein an identification data record has at least one item of information that uniquely identifies the respective aircraft (1) transmitting the identification data record,
b) a respective receiving device (2) is designed to assign at least one physical characteristic value measured in the receiving device (2), in particular a reception time and/or a reception power of the received identification data record, to a received identification data record,
c) an evaluation device (3) is designed to correlate the characteristic values originating from an aircraft (1) in such a way that variances between the received radio signals are determined in the form of differences between the characteristic values,
d) the evaluation device is designed to determine the current three-dimensional geographical position of the aircraft (1) from the variances,
wherein the receiving devices (2) provide at least the following information as data packets that are made available to the evaluation device (3): reception time, signal strength, information that uniquely identifies the aircraft (1), and the evaluation device (3), taking into account the geographical positions of wind farms (4, 5) known to it and the three-dimensional geographical position of the aircraft, generates switch-on and/or switch-off signals for switching on or off the air obstacle lighting and transmits them to the air obstacles.

9. System according to claim 8, **characterized in that** several or all of the receiving devices (2) of the system are each arranged on an antenna mast (6) of a cellular mobile phone network.

10. System according to claim 8 or 9, **characterized in that** several or all of the receiving devices (2) of the system are each designed as receiving devices for receiving aircraft transponder signals.

## Revendications

1. Procédé de commande de balisages lumineux d'obstacles à la navigation aérienne, comprenant les étapes suivantes :
a) plusieurs dispositifs de réception (2), installés à différents endroits et équipés d'antennes de réception à directivité orientée horizontalement, reçoivent des ensembles de données d'identification émis par radio par des aéronefs (1), un ensemble de données d'identification comportant au moins une information identifiant de manière univoque l'aéronef (1) respectif qui émet l'ensemble de données d'identification,
b) dans le dispositif de réception (2) respectif, un ensemble de données d'identification reçu est associé à au moins une valeur caractéristique physique, mesurée dans le dispositif de réception (2), en particulier un instant réception et/ou une puissance de réception de l'ensemble de données d'identification reçu,
c) dans un dispositif d'évaluation (3), les valeurs caractéristiques provenant d'un aéronef (1) sont mises en relation les unes avec les autres de telle sorte que les variances entre les signaux radio reçus sont déterminées sous forme de différences entre les valeurs caractéristiques,
d) la position géographique tridimensionnelle actuelle de l'aéronef (1) est déterminée à partir des variances,
dans lequel
les dispositifs de réception (2) fournissent, sous forme de paquets de données fournis au dispositif d'évaluation (3), au moins les informations suivantes : l'instant de réception, l'intensité du signal, les informations identifiant de manière univoque l'aéronef (1), et
le dispositif d'évaluation (3), en tenant compte des positions géographiques connues de parcs éoliens (4, 5) et de la position géographique tridimensionnelle de l'aéronef, génère des signaux d'activation et/ou de désactivation, destinés à activer ou désactiver les balisages lumineux d'obstacles à la navigation aérienne, et les transmet aux obstacles à la navigation aérienne.

2. Procédé selon la revendication 1,
**caractérisé en ce que** la position géographique tridimensionnelle de l'aéronef (1) est déterminée par triangulation et/ou trilatération à partir des variances.

3. Procédé selon l'une des revendications 1 à 2,
**caractérisé en ce que** la direction de vol et/ou la vitesse de vol de l'aéronef (1) sont déterminées à partir d'une pluralité de positions géographiques tridimensionnelles déterminées successivement pour un aéronef (1).

4. Procédé selon l'une des revendications 1 à 3,
**caractérisé en ce que** le dispositif d'évaluation (3) fournit la position géographique tridimensionnelle de l'aéronef (1) à des systèmes (9, 10) destinés à commander des balisages lumineux d'obstacles à la navigation aérienne et/ou envoie des signaux d'activation et/ou de désactivation destinés à activer ou désactiver des balisages lumineux d'obstacles à la navigation aérienne.

5. Procédé selon l'une des revendications 1 à 4,
**caractérisé en ce qu'**en cas de perte du signal radio reçu d'un aéronef (1), une première durée d'activation minimale du balisage lumineux d'obstacles à la navigation aérienne est déterminée, laquelle est calculée à partir de la direction de vol et de la vitesse de vol préalablement déterminées de l'aéronef (1).

6. Procédé selon la revendication 5,
**caractérisé en ce qu'**en supplément, une deuxième durée d'activation minimale, indépendante des données de vol de l'aéronef (1), est définie pour le balisage lumineux d'obstacles à la navigation aérienne, le balisage lumineux d'obstacles à la navigation aérienne n'étant désactivé qu'une fois que les première et deuxième durées d'activation minimales se sont écoulées.

7. Programme informatique avec des moyens de code de programme, conçu pour mettre en œuvre un procédé selon l'une des revendications 1 à 6, lorsque le procédé est exécuté sur un ordinateur.

8. Installation de commande de balisages lumineux d'obstacles à la navigation aérienne, présentant les éléments suivants :
a) plusieurs dispositifs de réception (2), qui sont installés à différents endroits et équipés d'antennes de réception à directivité orientée horizontalement et qui sont conçus pour recevoir des ensembles de données d'identification émis par radio par des aéronefs (1), un ensemble de données d'identification comportant au moins une information identifiant de manière univoque l'aéronef (1) respectif qui émet l'ensemble de données d'identification,
b) un dispositif de réception (2) respectif, qui est conçu pour associer un ensemble de données d'identification reçues à au moins une valeur caractéristique physique, mesurée dans le dispositif de réception (2), en particulier un instant de réception et/ou une puissance de réception de l'ensemble de données d'identification reçu,
c) un dispositif d'évaluation (3), qui est conçu pour mettre en relation les valeurs caractéristiques provenant d'un aéronef (1), de telle sorte que les variances entre les signaux radio reçus sont déterminées sous forme de différences entre les valeurs caractéristiques,
d) le dispositif d'évaluation étant conçu pour déterminer la position géographique tridimensionnelle actuelle de l'aéronef (1) à partir des variances,
dans lequel
les dispositifs de réception (2) fournissent, sous forme de paquets de données fournis au dispositif d'évaluation (3), au moins les informations suivantes : l'instant de réception, l'intensité du signal, les informations identifiant de manière univoque l'aéronef (1), et
le dispositif d'évaluation (3), en tenant compte des positions géographiques connues de parcs éoliens (4, 5) et de la position géographique tridimensionnelle de l'aéronef, génère des signaux d'activation et/ou de désactivation, destinés à activer ou désactiver les balisages lumineux d'obstacles à la navigation aérienne, et les transmet aux obstacles à la navigation aérienne.

9. Installation selon la revendication 8,
**caractérisée en ce que** plusieurs ou tous les dispositifs de réception (2) de l'installation sont disposés sur un mât d'antenne (6) d'un réseau de téléphonie mobile cellulaire.

10. Installation selon la revendication 8 ou 9,
**caractérisée en ce que** plusieurs ou tous les dispositifs de réception (2) de l'installation sont conçus sous la forme d'un dispositif de réception destiné à recevoir des signaux de transpondeur d'aéronef.
